# EUROPÄISCHE PATENTSCHRIFT

(11) **EP 0 632 222 B1**
(45) Veröffentlichungstag und Bekanntmachung des Hinweises auf die Patenterteilung: **18.09.1996**
(21) Anmeldenummer: 94106703.5
(22) Anmeldetag: 28.04.1994
(51) Int. Cl.: F16L 3/233, B65D 63/10, H02G 3/26

(54) **Haltevorrichtung aus Kunststoff**
Holding device made from plastic material
Dispositif de fixation en matière plastique

(30) Priorität: 29.06.1993 DE 9309656 U
(43) Veröffentlichungstag der Anmeldung: 04.01.1995
(73) Patentinhaber: TRW United-Carr GmbH & Co. KG, D-67677 Enkenbach-Alsenborn (DE)
(72) Erfinder: Kraus, Willibald, D-67269 Grünstadt (DE)
(74) Vertreter: Schieschke, Klaus, Dipl.-Ing.

(56) Entgegenhaltungen:
- EP-A- 0 281 968
- EP-A- 0 389 831
- EP-A- 0 420 452
- US-A- 3 875 620
- US-A- 4 342 438
- US-A- 4 342 438

## Beschreibung

Die Erfindung bezieht sich auf eine Haltevorrichtung aus Kunststoff zur Befestigung mindestens eines rohrförmigen Gegenstands an einem Träger gemäß dem Oberbegriff des Anspruchs 1.

Als Stand der Technik ist bereits eine derartige Haltevorrichtung bekannt, welche als Kabelband dient (DE-PS 31 43 775). Dieses Kabelband ist so beschaffen, daß der Befestigungsbereich leiterartig ausgebildet ist und mit entsprechenden Elementen in Halteklauen am Haltebereich eingreift, um die zu befestigenden Gegenstände, beispielsweise Kabel im Motorraum eines Kraftfahrzeuges, gebündelt zusammenzufassen.

Weiterer Stand der Technik ist ein Kabelband, bei welchem die Rast am Umfang des Haltebereichs aus zwei federnden Nasen besteht, welche in die entsprechenden Verrastungen des Befestigungsbereichs eingreifen, der seinerseits wiederum leiterartig ausgebildet ist (EP-PS 0 269 727). Statt der leiterartigen Ausbildung der Verrastungen ist es auch bekannt, den Befestigungsbereich geschlossen auszubilden und mit Nocken zu versehen, welche in einen entsprechenden Schlitz als Gegenrast am Haltebereich eingreifen (DE-OS 1 810 515). Auch Verzahnungen zur Bildung der Verrastung im Befestigungsbereich zählen bei einem Kabelband zum bekannten Stand der Technik (US-PS 3 550 219). Darüber hinaus ist ein Kabelband bekannt, bei welchem durch Herausformen aus dem Befestigungsbereich jeweils ein Zahn geschaffen wird, welcher in eine entsprechende Gegenrast eingreift, die sich im Abstand von dem Haltebereich befindet (DE-OS 2 045 300).

Ebenfalls bekannt ist ein Kabelband, bei welchem zwei Stege einen am Haltebereich angeformten Rastarm hintergreifen (EP-A-0 281 968).

Demgegenüber besteht die Aufgabe der vorliegenden Erfindung darin, eine derartige Haltevorrichtung zu verbessern und so zu gestalten, daß bei einfacherer Montage eine verbesserte Halterung der zu umschlingenden Gegenstände gewährleistet ist.

Diese Aufgabe wird erfindungsgemäß dadurch gelöst, daß die Gegenrast aus einem verdickten Element besteht und daß die jeweilige Verrastung des Befestigungsbereichs mindestens zwei federnde, das verdickte Element hintergreifende Stege aufweist. Diese Stege sind zungenartig ausgebildet und radial zum Mittelpunkt der Gegenrast gerichtet. Durch das Zusammenwirken von Rast und Gegenrast in Form von verdicktem Element und federnden, dieses Element hintergreifenden zungenartig ausgebildeten Stegen ergibt sich bei einfacherer Gestaltung des Kabelbandes eine verbesserte Montage.

Das verdickte Element kann z.B. eine Kugel oder ein anderer, rotationssymmetrischer Körper sein; dieser kann am Umfang des Haltebereichs angeordnet sein. - Der Haltebereich kann auf einem Profilbolzen befestigbar sein und einen Arm mit einem verdickten Element, beispielsweise einer Kugel, aufweisen.

Die zungenartig ausgebildeten Stege können entweder durchgehend ausgebildet und mit einem Zwischenraum versehen sein . Hierbei können sich entweder mindestens zwei zungenartige Stege gegenüberliegen oder drei zungenartige Stege über den Umfang einer die Kugel der Gegenrast aufnehmenden Öffnung angeordnet sein.

In weiterer Ausgestaltung der Erfindung kann zwischen den zungenartigen Stegen angrenzender Verrastungen ein Zwischenraum vorhanden sein, um eine entsprechende Elastizität des aus Kunststoff bestehenden Kabelbandes zu schaffen. Darüber hinaus können die zungenartigen Stege aus der Ebene des Befestigungsbereichs herausragen und gegen die Kugel der Gegenrast gerichtet sein.

In weiterer Ausgestaltung der Erfindung kann zwischen dem Haltebereich und dem Befestigungsbereich ein an sich bekannter längenveränderbarer Zwischenbereich angeordnet sein, welcher entweder aus zwei gegeneinander gewellten Längsstegen oder als gelochtes Band ausgebildet ist. Beim Einsatz von gewellten Längsstegen besteht alternativ die Möglichkeit, daß diese im engsten Bereich miteinander verbunden sind. Weiterhin können die Längsstege bzw. das gelochte Band in Längsrichtung gewellt ausgebildet sein.

Nach einem anderen Merkmal der Erfindung kann der Haltebereich über den Umfang der Öffnung verteilt Führungselemente und Rastnasen aufweisen, wobei vorteilhafterweise der Arm der Gegenrast an der äußeren Wandung eines Führungselements oder einer Rastnase angeordnet ist. Zur Vereinfachung der Montage bzw. Demontage kann sich an den Befestigungsbereich ein an sich bekannter Griffbereich anschließen.

Die Erfindung wird nachfolgend anhand von in der Zeichnung dargestellten Ausführungsbeispielen näher beschrieben. In der Zeichnung zeigen:
- Fig. 1: eine schematische Seitenansicht einer Haltevorrichtung im montierten Zustand;
- Fig. 2: eine Draufsicht auf die Haltevorrichtung im unmontierten Zustand;
- Fig. 3 bis 5: verschiedene Gestaltungsmöglichkeiten des Haltebereichs in Seitenansicht;
- Fig. 6 bis 8: die jeweilige Draufsicht auf den Haltebereich gemäß den Ausführungsformen nach Fig. 3 - 5;
- Fig. 9 bis 11: verschiedene Gestaltungsmöglichkeiten des Zwischenelements in Draufsicht, teils gebrochen;
- Fig. 12 bis 18: verschiedene Gestaltungsmöglichkeiten der Verrastung des Befestigungsbereichs in Draufsicht, teils gebrochen;
- Fig. 19: eine teilweise Schnittansicht der Ausführungsform nach Fig. 16.

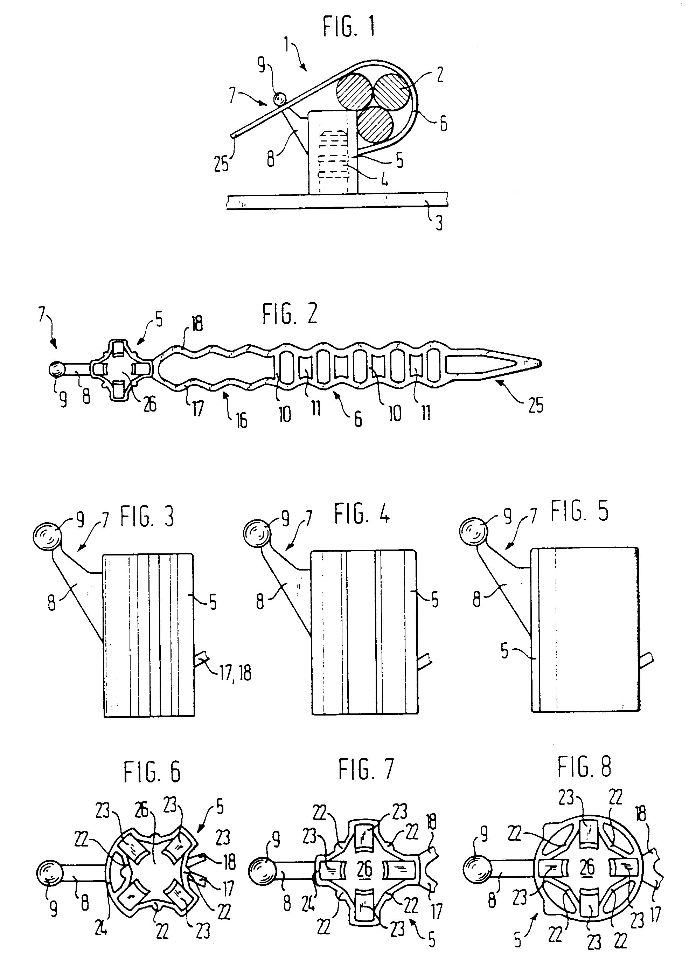

In Fig. 1 ist die Haltevorrichtung 1 in montiertem Zustand dargestellt, wie sie auf einem Träger 3 befestigt ist. Auf diesem Träger 3 ist ein Profilbolzen 4 aufgeschweißt, auf welchen ein Haltebereich 5 der Haltevorrichtung 1 aufgepreßt wurde. Dieser Haltebereich weist z.B. federnde Eingriffselemente auf, welche sich an die entsprechenden Profile des Profilbolzens anlegen und damit den Haltebereich 5 der Haltevorrichtung 1 sicher an dem Träger 3 über den Profilbolzen 4 befestigen. Auch andere Konfigurationen des Haltebereichs sind denkbar; z.B. federnde, in die Trägeröffnung eingreifbare Haltearme, Zapfen oder Verriegelungsteile.

An dem Haltebereich 5 ist ein Befestigungsbereich 6 angebracht, welcher bandartig ausgebildet ist und mehrere Verrastungen aufweist. Auf der gegenüberliegenden Seite des Haltebereichs 5 befindet sich als Gegenrast 7 für die Verrastungen des Befestigungsbereichs 6 ein verdicktes Element 9; z.B. eine Kugel, welche über einen Arm 8 an dem Haltebereich 5 befestigt ist. Der Arm 8 kann im spitzen Winkel zur Längsachse des Haltebereichs ragen, so daß sich zur Befestigung von rohrförmigen Gegenständen 2 nach Fig. 1 eine leichte Montage- bzw. Demontagemöglichkeit ergibt; die Gegenrast 7 mit der Kugel 9 greift in die entsprechende Verrastung des Befestigungsbereichs 6 ein.

Aus Fig. 2 ist ersichtlich, daß die Möglichkeit besteht, zwischen dem Haltebereich 5 und dem bandartig ausgebildeten Befestigungsbereich 6 einen Zwischenbereich 16 anzuordnen, welcher bei dem in Fig. 2 dargestellten Ausführungsbeispiel aus zwei wellenartig verlaufenden Längsstegen 17 und 18 besteht. Diese Längsstege 17 und 18 werden im Befestigungsbereich 6 durch quer verlaufende Stege 10 begrenzt, welche die Verrastung für die Kugel 9 bilden. Jeweils zwischen zwei benachbarten Stegen 10 angrenzender Verrastungen befindet sich ein Zwischenraum 11, so daß sich eine sehr gute Elastizität des Befestigungsbereichs ergibt. Am hinteren Ende des Befestigungsbereichs ist ein Griffbereich 25 angeordnet, welcher die Montage bzw. Demontage erleichtert.

In Fig. 3 und 6 bzw. 4 und 7 sowie 5 und 8 sind in Seitenansicht und Draufsicht der jeweilige Haltebereich 5 dargestellt. Wie ersichtlich, weist der Haltebereich 5 über den Umfang einer Öffnung 26 verteilt Führungselemente 22 und Rastnasen 23 auf. Bei dem Ausführungsbeispiel nach Fig. 3 bzw. 6 ist der Arm 8 der Gegenrast 7 an der äußeren Wandung 24 des Führungselements 22 angeordnet. Gegenüberliegend des Arms 8 befinden sich die Stege 17 und 18 des elastischen Zwischenbereichs 16.

Bei dem Ausführungsbeispiel nach Fig. 4 bzw. 7 ist der Arm 8 an der äußeren Wandung 24 einer Rastnase angeordnet, wobei sich wiederum gegenüberliegend die Stege 17 und 18 des elastischen Zwischenbereichs befinden.

Das Ausführungsbeispiel nach Fig. 5 und 8 zeigt eine ähnliche Gestaltung wie bei dem Ausführungsbeispiel nach Fig. 4 und 7, wobei jedoch die Führungselemente 22 jeweils eine äußere Wandung besitzen. Diese Konstruktion der Gestaltung der Führungselemente und der Rastnasen im Haltebereich 5 sind durch die DE-OS 37 39 443.6 bekannt.

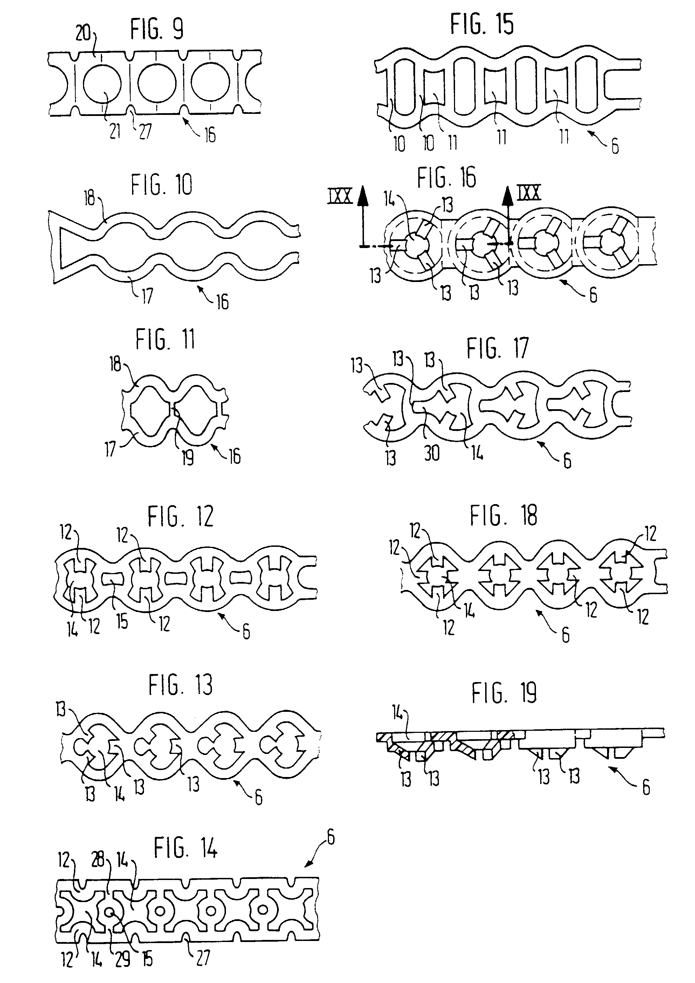

Fig. 9, 10 und 11 zeigen verschiedene Gestaltungsmöglichkeiten des federnden Zwischenbereichs 16. Nach Fig. 9 ist hierbei dieser Bereich 16 als Band 20 mit Löchern 21 ausgebildet, wobei im äußeren Bereich zur Verbesserung der Federwirkung Aussparungen 27 vorgesehen sind.

Bei dem Ausführungsbeispiel nach Fig. 10, welches dem nach Fig. 2 gleicht, besteht der längenveränderbare Zwischenbereich 16 aus zwei gegeneinander gewellten Längsstegen 17 und 18. Bei dem Ausführungsbeispiel nach Fig. 11 sind die Längsstege 17 und 18 im engsten Bereich 19 miteinander verbunden.

Der elastische Zwischenbereich, wie er beispielsweise in den Figuren 9, 10 und 11 dargestellt ist, kann beispielsweise auch in Längsrichtung gewellt ausgebildet sein, wodurch sich eine weitere Verbesserung der Elastizität dieses längenveränderbaren Zwischenbereichs ergibt.

Die Figuren 12 bis 18 zeigen verschiedene Gestaltungsmöglichkeiten der Verrastung des Befestigungsbereichs 6. Nach Fig. 12 liegen zwei zungenartige Stege 12 vor, welche in eine Öffnung 14 ragen, die zur Aufnahme der Kugel 9 der Gegenrast 7 dient. Zwischen benachbarten Verrastungen ist ein Zwischenraum 15 vorgesehen, wodurch sich eine erhebliche Verbesserung der Elastizität ergibt. Fig. 12 zeigt vier Verrastungen, welche jeweils zwei einander gegenüberliegende zungenartige Stege 12 aufweisen.

Nach Fig. 13 sind drei zungenartige Stege 13 über den Umfang einer die Kugel 8 der Gegenrast 7 aufnehmenden Öffnung 14 angeordnet. Fig. 13 zeigt damit insgesamt vier Verrastungen des Befestigungsbereichs 6.

Bei dem Ausführungsbeispiel nach Fig. 14 sind zwei in ihrer Konfiguration rund ausgebildete zungenartige Stege 12 vorgesehen, welche in die Öffnung 14 ragen und im montierten Zustand die Kugel 9 der Gegenrast 7 begrenzen. Zwischen den Öffnungen 14 befindet sich jeweils ein Zwischenraum 15, welcher über Stege 28 und 29 an den äußeren Rand des Befestigungsbereichs 6 anschließt.

Auch hier sind wiederum Aussparungen 27 vorgesehen, um die Elastizität des Befestigungsbereichs zu verbessern.

Bei dem Ausführungsbeispiel nach Fig. 15, welches dem nach Fig. 2 gleicht, sind die Stege 10 durchgehend ausgebildet. Zwischen zwei benachbarten Stegen 10 angrenzender Verrastungen befindet sich ein Zwischenraum 11.

Das Ausführungsbeispiel nach Fig. 16 ähnelt dem nach Fig. 13 insofern, als wiederum drei zungenartige Stege 13 über den Umfang der Öffnung 14 angeordnet sind. Aus der Schnittansicht nach Fig. 19 ist ersichtlich, daß hier die zungenartigen Stege 13 aus der Ebene des Befestigungsbereichs 6 herausragen und somit gegen die Kugel 9 der Gegenrast 8 gerichtet sind.

Das Ausführungsbeispiel nach Fig. 17 des Befestigungsbereichs 6 ist so gestaltet, daß drei zungenartige Stege vorliegen, wobei zwei zungenartige Stege 13 identisch ausgebildet sind und der dritte zungenartige Steg eine annähernd gewölbte Form aufweist. Hinter dieser gewölbten Form befindet sich eine speziell gestaltete Ausnehmung 30, um die nächste Verrastung des Befestigungsbereichs 6 zu bilden.

Bei der Ausführungsform nach Fig. 18 liegen sich jeweils zwei zungenartige Stege diagonal gegenüber und ragen in die Öffnung 14.

Allen Ausführungsformen des Befestigungsbereichs 6 ist gemeinsam, daß die Stege 10 bzw. 13 so gestaltet sind, daß sich eine gute Federwirkung beim Hintergreifen hinsichtlich der Kugel 9 der Gegenrast 7 ergibt.

Durch die spezielle Gestaltung des Kabelbandes wird bei vereinfachter und erleichterter Montage eine verbesserte Halterung von rohrförmigen Gegenständen 2 nach Fig. 1 geschaffen, wobei die gesamte Haltevorrichtung 1, welche aus Kunststoff besteht, auf einen Profilbolzen 6 aufgebracht wird und dort an dem Träger 3, beispielsweise einer Kraftfahrzeugkarosserie, verliersicher gehaltert ist.

Die Ausführungen gemäß den Figuren 9 bis 11 und 15 gehören nicht zur beanspruchten Erfindung.

## Patentansprüche

1. Haltevorrichtung (1) aus Kunststoff zur Befestigung mindestens eines rohrförmigen Gegenstands (2) an einem Träger (3), mit einem Haltebereich (5) und einem bandartig ausgebildeten Befestigungsbereich (6) mit mehreren Verrastungen, welcher nach Umschlingen des rohrförmigen Gegenstands (2) mit einer am Haltebereich (5) angeordneten Gegenrast (7) verbindbar ist, wobei die Gegenrast (7) aus einem verdickten Element (9) besteht und die jeweilige Verrastung des Befestigungsbereichs (6) mindestens zwei federnde, das verdickte Element (9) hintergreifende Stege (10; 12; 13) aufweist, dadurch gekennzeichnet,
daß die Stege (12) zungenartig ausgebildet und radial zum Mittelpunkt der Gegenrast (7) gerichtet sind.

2. Haltevorrichtung nach Anspruch 1, mit einem mit einer Öffnung mit federnden Eingriffselementen versehenen, auf einen Profilbolzen an dem Träger befestigbaren Haltebereich,
dadurch gekennzeichnet,
daß das verdickte Element (9) mit dem Umfang des Haltebereichs (5) verbunden ist.

3. Haltevorrichtung nach Anspruch 2,
dadurch gekennzeichnet,
daß das als Kugel ausgebildete, verdickte Element (9) an einem im Winkel zur Längsachse des Haltebereichs (5) verlaufenden Arm (8) angeordnet ist.

4. Haltebereich nach Anspruch 3,
dadurch gekennzeichnet,
daß der Arm (8) im spitzen Winkel zur Längsachse des Haltebereichs (5) angeordnet ist.

5. Haltevorrichtung nach Anspruch 1,
dadurch gekennzeichnet,
daß sich mindestens zwei zungenartige Stege (12) gegenüberliegen (Fig. 12, Fig. 18).

6. Haltevorrichtung nach Anspruch 3,
dadurch gekennzeichnet,
daß drei zungenartige Stege (13) über den Umfang einer die Kugel (8) der Gegenrast (7) aufnehmenden Öffnung (14) angeordnet sind (Fig. 13, 16, 17).

7. Haltevorrichtung nach Anspruch 1,
dadurch gekennzeichnet,
daß zwischen den zungenartigen Stegen (12; 13) angrenzender Verrastungen ein Zwischenraum (15) vorhanden ist (Fig. 12, Fig. 14).

8. Haltevorrichtung nach einem der Ansprüche 3 oder 6,
dadurch gekennzeichnet,
daß die zungenartigen Stege (13) aus der Ebene des Befestigungsbereichs (6) herausragen und gegen die Kugel (9) der Gegenrast (8) gerichtet sind (Fig. 19).

9. Haltevorrichtung nach einem der vorhergehenden Ansprüche,
dadurch gekennzeichnet,
daß zwischen dem Haltebereich (5) und dem Befestigungsbereich (6) ein an sich bekannter längenveränderbarer Zwischenbereich (16) angeordnet ist.

10. Haltevorrichtung nach Anspruch 9,
dadurch gekennzeichnet,
daß der Zwischenbereich (16) aus zwei gegeneinander gewellten Längsstegen (17, 18) besteht (Fig. 2, Fig. 10).

11. Haltevorrichtung nach Anspruch 10,
dadurch gekennzeichnet,
daß die Längsstege (17, 18) im engsten Bereich (19) miteinander verbunden sind.

12. Haltevorrichtung nach Anspruch 9,
dadurch gekennzeichnet,
daß der Zwischenbereich (16) als gelochtes Band (20) ausgebildet ist (Fig. 9).

13. Haltevorrichtung nach Anspruch 9 bis 12,
dadurch gekennzeichnet,
daß die Längsstege (17, 18) bzw. das gelochte Band (20) in Längsrichtung gewellt ausgebildet sind.

14. Haltevorrichtung nach Anspruch 1,
dadurch gekennzeichnet,
daß der Haltebereich (5) über den Umfang der Öffnung verteilt Führungselemente (22) und Rastnasen (23) aufweist.

15. Haltevorrichtung nach Anspruch 1 und 14,
dadurch gekennzeichnet,
daß der Arm (8) der Gegenrast (7) an der äußeren Wandung (24) eines Führungselements (22) oder einer Rastnase (23) angeordnet ist.

16. Haltevorrichtung nach einem der vorhergehenden Ansprüche,
dadurch gekennzeichnet,
daß sich an den Befestigungsbereich (6) ein an sich bekannter Griffbereich (25) anschließt.

## Claims

1. Holding device (1) made of plastic for fastening at least one tubular object (2) on a support (3), having a holding region (5) and a fastening region (6) which is of strip-like design, has a plurality of catches and, after being bent round the tubular object (2), can be connected to a mating latch (7) arranged on the holding region (5), the mating latch (7) consisting of a thickened element (9) and the respective catch of the fastening region (6) having at least two resilient webs (10; 12; 13) which engage behind the thickened element (9), characterized in that the webs (12) are of tongue-like design and are directed radially to the centre point of the mating latch (7).

2. Holding device according to Claim 1, having a holding region which is provided with an opening having resilient engagement elements and can be fastened on a profiled bolt on the support, characterized in that the thickened element (9) is connected to the periphery of the holding region (5).

3. Holding device according to Claim 2, characterized in that the thickened element (9), which is designed as a ball, is arranged on an arm (8) which runs at an angle to the longitudinal axis of the holding region (5).

4. Holding device according to Claim 3, characterized in that the arm (8) is arranged at an acute angle to the longitudinal axis of the holding region (5).

5. Holding device according to Claim 1, characterized in that at least two tongue-like webs (12) lie opposite one another (Fig. 12, Fig. 18).

6. Holding device according to Claim 3, characterized in that three tongue-like webs (13) are arranged over the periphery of an opening (14) which receives the ball (9) of the mating latch (7) (Figs. 13, 16, 17).

7. Holding device according to Claim 1, characterized in that an interspace (15) is present between the tongue-like webs (12; 13) of adjacent catches (Fig. 12, Fig. 14).

8. Holding device according to one of Claims 3 or 6, characterized in that the tongue-like webs (13) project from the plane of the fastening region (6) and are directed towards the ball (9) of the mating latch (7) (Fig. 19).

9. Holding device according to one of the preceding claims, characterized in that an intermediate region (16) which is known per se and whose length can be varied is arranged between the holding region (5) and the fastening region (6).

10. Holding device according to Claim 9, characterized in that the intermediate region (16) consists of two longitudinal webs (17, 18) which are corrugated with respect to one another (Fig. 2, Fig. 10).

11. Holding device according to Claim 10, characterized in that the longitudinal webs (17, 18) are connected to one another in the narrowest region (19).

12. Holding device according to Claim 9, characterized in that the intermediate region (16) is designed as a perforated strip (20) (Fig. 9).

13. Holding device according to Claims 9 to 12, characterized in that the longitudinal webs (17, 18) or the perforated strip (20) are of corrugated design in the longitudinal direction.

14. Holding device according to Claim 1, characterized in that the holding region (5) has guide elements (22) and latching lugs (23) distributed over the periphery of the opening.

15. Holding device according to Claims 1 and 14, characterized in that the arm (8) of the mating latch (7) is arranged on the outer wall (24) of a guide element (22) or a latching lug (23).

16. Holding device according to one of the preceding claims, characterized in that a grip region (25) which is known per se adjoins the fastening region (6).

## Revendications

1. Dispositif de retenue (1) en matière plastique pour fixer au moins un objet tubulaire (2) à un support (3), comprenant une zone de retenue (5) et une zone de fixation (6) de réalisation du type ruban qui présente plusieurs organes d'encliquetage et peut être reliée, après avoir ceinturé l'objet tubulaire (2), à un cran complémentaire (7) situé sur la zone de retenue (5), le cran complémentaire (7) étant constitué d'un élément épaissi (9), et l'organe d'encliquetage considéré de la zone de fixation (6) étant muni d'au moins deux membrures élastiques (10 ; 12 ; 13) emprisonnant par-derrière l'élément épaissi (9), caractérisé par le fait
que les membrures (12) sont réalisées à la manière de languettes et sont dirigées radialement vers le centre du cran complémentaire (7).

2. Dispositif de retenue selon la revendication 1, comportant une zone de retenue munie d'un orifice présentant des éléments élastiques de venue en prise, et pouvant être fixée au support sur un tenon profilé,
caractérisé par le fait
que l'élément épaissi (9) est relié au pourtour de la zone de retenue (5).

3. Dispositif de retenue selon la revendication 2,
caractérisé par le fait
que l'élément épaissi (9), réalisé sous la forme d'une bille, est situé sur un bras (8) s'étendant à l'oblique par rapport à l'axe longitudinal de la zone de retenue (5).

4. Zone de retenue selon la revendication 3,
caractérisée par le fait
que le bras (8) est agencé à angle aigu par rapport à l'axe longitudinal de la zone de retenue (5).

5. Dispositif de retenue selon la revendication 1,
caractérisé par le fait
qu'au moins deux membrures (12) du type languettes se font mutuellement face (figure 12, figure 18).

6. Dispositif de retenue selon la revendication 3,
caractérisé par le fait
que trois membrures (13) du type languettes sont agencées sur le pourtour d'un orifice (14) recevant la billé (8) du cran complémentaire (7) (figures 13, 16, 17).

7. Dispositif de retenue selon la revendication 1,
caractérisé par le fait
qu'un espace interstitiel (15) se trouve entre les membrures (12 ; 13) du type languettes d'organes d'encliquetage adjacents (figure 12, figure 14).

8. Dispositif de retenue selon l'une des revendications 3 ou 6,
caractérisé par le fait
que les membrures (13) du type languettes font saillie au-delà du plan de la zone de fixation (6) et sont dirigées vers la bille (9) du cran complémentaire (8) (figure 19).

9. Dispositif de retenue selon l'une des revendications précédentes, caractérisé par le fait
qu'une zone intermédiaire (16) de longueur variable, connue par elle-même, est interposée entre la zone de retenue (5) et la zone de fixation (6).

10. Dispositif de retenue selon la revendication 9,
caractérisé par le fait
que la zone intermédiaire (16) est constituée de deux membrures longitudinales (17, 18) ondulées l'une vers l'autre (figure 2, figure 10).

11. Dispositif de retenue selon la revendication 10,
caractérisé par le fait
que les membrures longitudinales (17, 18) sont reliées l'une à l'autre dans la région (19) la plus étroite.

12. Dispositif de retenue selon la revendication 9,
caractérisé par le fait
que la zone intermédiaire (16) est réalisée sous la forme d'un ruban perforé (20) (figure 9).

13. Dispositif de retenue selon les revendications 9 à 12,
caractérisé par le fait
que les membrures longitudinales (17, 18) ou le ruban perforé (20) sont respectivement de réalisation ondulée dans le sens longitudinal.

14. Dispositif de retenue selon la revendication 1,
caractérisé par le fait
que la zone de retenue (5) présente des éléments de guidage (22) et des becs encliquetables (23),répartis sur le pourtour de l'orifice.

15. Dispositif de retenue selon les revendications 1 et 14,
caractérisé par le fait
que le bras (8) du cran complémentaire (7) se trouve sur la paroi extérieure (24) d'un élément de guidage (22) ou d'un bec encliquetable (23).

16. Dispositif de retenue selon l'une des revendications précédentes,
caractérisé par le fait
qu'une zone de préhension (25), connue par elle-même, se rattache à la zone de fixation (6).
